# EUROPEAN PATENT APPLICATION

(11) **EP 1 801 745 A1**
(43) Date of publication of application: **27.06.2007**
(21) Application number: 06125425.6
(22) Date of filing: 05.12.2006
(51) Int. Cl.: G06Q 10/00

(54) **Method and system for blocking phishing scams**

(30) Priority: 14.12.2005 US 302274
(71) Applicant: Aladdin Knowledge Systems, Ltd., Tel Aviv 61110 (IL)
(72) Inventor: Berman, Rueben, Beer-Sheva (IL)
(74) Representative: Papa, Elisabetta

(57) **Abstract**

The present invention is directed to a method for blocking phishing, the method comprising the steps of: upon activating a hyperlink within an email message by a user's email client: sending the original URL reference of the hyperlink to a phishing inspection utility; testing the original URL reference by the phishing inspection utility for being a phishing URL; if the original URL is not found as phishing URL, directing a browser of the user to the original URL. The method may further comprise the step of: replacing the original URL reference of the hyperlink with a URL reference of the phishing inspection utility; and setting the original URL reference as a parameter to the URL reference of the phishing inspection utility, thereby on activating the hyperlink providing to the inspection utility the URL reference to be tested.

## Description

### Field of the Invention

The present invention relates to the field of phishing detection and blocking.

### Background of the Invention

The term "phishing" refers in the art to a scam in which a legitimate-looking email, that looks like it has been sent from a legitimate enterprise, attracts a recipient thereof to click a link which directs his browser to a different web site than it suppose to. In this web site he may be asked to update his private information, such as his user name and password, credit card number, social security number, etc. The web site however is a spoof and is set up only for stealing the user's information.

Currently the solutions for blocking phishing put the emphasis on the user cautiousness and ability to identify phishing attempts. For example, the U.S. Federal Trade Commission (FTC) in an article from June 2004 titled as "How Not to Get Hooked by a 'Phishing' Scam" proposes several steps of how to block phishing, such as "Don't email personal or financial information", or "Be cautious about opening any attachment or downloading any files from emails you receive, regardless of who sent them."
(http://www.ftc.gov/bcp/conline/pubs/alerts/phishingalrt.htm)

The web site of http://www.internetidentity.com/news.html presents recent phishing attacks and how to identify them:
- "eBay never send their users emails requesting personal details in this way.";
- "The REAL URL of the spoof website has been chosen to look very similar to the actual eBay URL. Do not be fooled!";
- "The REAL URL of the spoof website is disguised as "http://signin.ebay.com/awsecure/ cc-update.html".

Fig. 1 is a phishing email message that was reported to millersmile.co.uk. If the user clicks the hyperlink 1, i.e. the *"http:*//*signin.ebay.com*/*ws2*/*eBayISAPI.dl",* his browser is directed to the phisher's web site.

Fig. 2 is a web page to which a user that has clicked the hyperlink 1 is directed. The details the user enter on the web page are described in Fig. 2, such as the eBay User ID and Password, are sent to the phisher, which may use them in a malicious manner.

Phishing e-mails can appear to be from any bank, credit card companies, an online retail store, PayPal, eBay, and so forth. The people behind phishing, the scammers, send out millions of these scam e-mails, hoping that even a few recipients will fall into the trap and provide their personal and financial information. Actually, anyone with an e-mail address is at risk of being phished. Furthermore, any e-mail address that has been made public on the Internet, e.g. by posting in forums, newsgroups, or on a Web site, can be used as a phishing email.

Publication WO 2005/027016 discloses a method for detecting phishing. In some embodiments, the technique presented on this publication comprises extracting a plurality of reference points, classifying the plurality of reference points, and detecting that the message is a phish message based on the classified reference points. The importance of the method is that it can be used in an automated system.

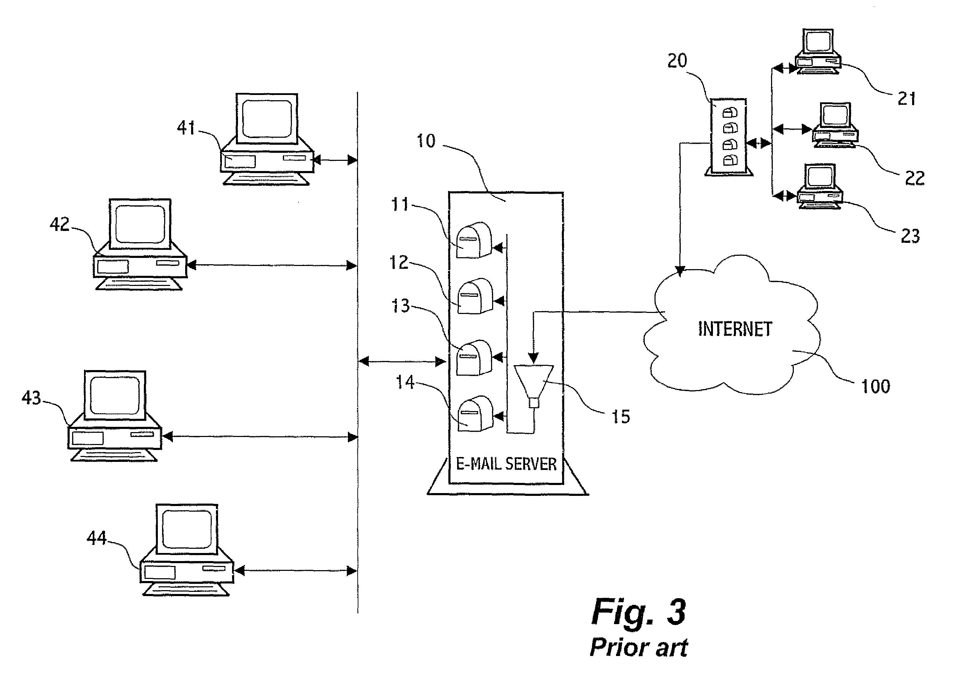

Fig. 3 schematically illustrates operation and infrastructure of email delivering and blocking, according to the prior art. A mail server 10 maintains email accounts 11 to 14, belonging to users 41 to 44 respectively. Another mail server 20 serves users 21 to 23. The mail server 10 also comprises an email blocking facility 15, for detecting the presence of malicious code within incoming email messages, and blocking malicious messages.

An email message sent from, e.g., user 21 to, e.g., user 42, passes through mail server 20, through Internet 100, until it reaches mail server 10. At mail server 10, the email message is scanned by blocking facility 15, and if no malicious code is detected, it is then stored in email box 12, which belongs to user 42. The next time user 42 opens his mailbox 12 he finds the delivered email message.

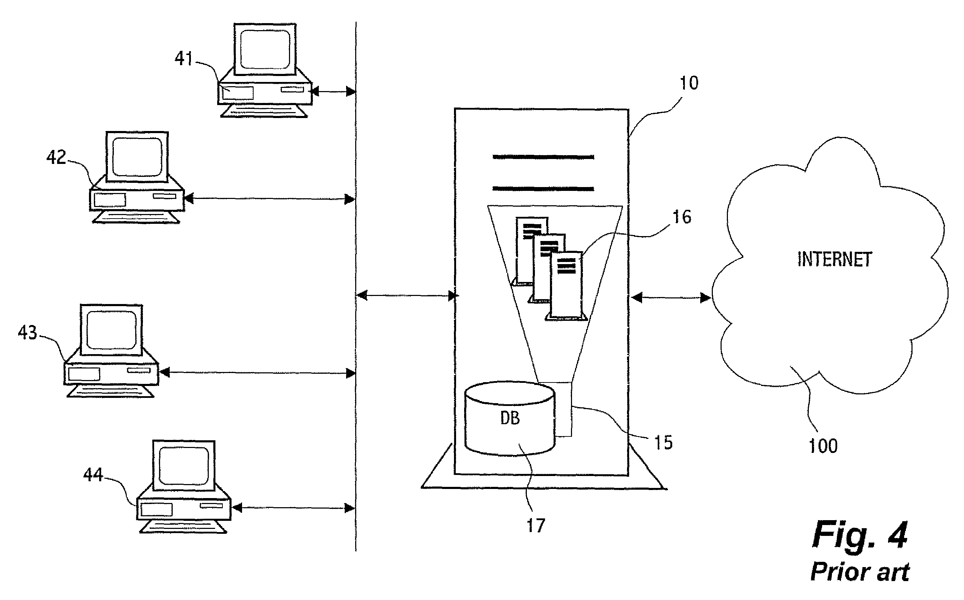

Referring again to Fig. 3, in the prior art it is common that the phishing detection and blocking activities, such as those described in WO 2005/027016, are carried in the blocking facility 15. The activity of blocking facility 15 may be carried out by a plurality of servers 16, as illustrated in Fig 4, in order to be able to server a large number of users and emails. In order to improve the operation of servers 16 it is common to employ a load balancing mechanism, which results with increased complexity and a higher cost for the purpose of maintaining the facility 15.

Referring again to Fig. 4, the blocking utility 15 makes use of a database 17 which keeps update information related to phishing detection and blocking. For example, the database 17 may maintain a "black list" of phishing URLs. Thus, during the phishing detection operation each URL within an email message is compared with the URLs of the black list, and if such URL is found within an email message, it can be removed from the email message and replaced by a URL which displays a warning, etc.

The phishing black list within the database 17 is kept updated by sending updated information from a central server through the Internet to databases that server organizations, ISPs etc., in the same manner of a virus list. However, since a user doesn't necessarily open an email message at the moment it is received in his mailbox, but can do it later on, there is a reasonable chance that the phishing inspection that was carried out earlier in the email server is not ultimate since new URLs might be added to the phishing black list during the period passed from the time an email message is received at the mail server, until the time the user opens the email message.

It should be noted that the blocking utility 15 doesn't necessarily have to reside at an email server, but also at a gateway to a local area network, a firewall server, etc. Actually, the blocking utility 15 is deployed on a "mail junction", i.e. a point in the course of an email message from a sender thereof to a recipient thereof.

It is an object of the present invention to provide a method and system for blocking phishing, which decreases the processing effort required for detecting and blocking phishing.

It is another object of the present invention to provide a method and system for detecting and blocking phishing, which employs an updated black list of phishing URLs.

Other objects and advantages of the invention will become apparent as the description proceeds.

### Summary of the Invention

In one aspect, the present invention is directed to a method for blocking phishing, the method comprising the steps of: upon activating a hyperlink of an email message at a user's email client, testing the URL reference of the hyperlink for being a phishing URL; and if the URL is not indicated as a phishing URL, directing a browser of the user to the URL. According to one embodiment of the invention, the operation of testing the URL reference of a hyperlink for being a phishing URL is carried out by searching the URL reference in an updated black list of phishing URL references. Preferably the black list is updated by a phishing center over a network.

In another aspect, the present invention is directed to a method for blocking phishing, the method comprising the steps of: upon activating a hyperlink within an email message by a user's email client: sending an original URL reference of the hyperlink to a phishing inspection utility; testing the original URL reference by the phishing inspection utility for being a phishing URL; if the original URL is not found as phishing URL, directing a browser of the user to the original URL. According to a preferred embodiment of the invention, the sending operation includes the steps of: replacing the original URL reference of the hyperlink with a URL reference of the phishing inspection utility; and setting the original URL reference as a parameter to the URL reference of the phishing inspection utility, thereby on activating the hyperlink providing to the inspection utility the URL reference to be tested. According to a preferred embodiment of the invention, the testing is carried out by searching the original URL reference within a black list of known phishing URL references. Preferably, the phishing inspection utility is located remotely to the email client.

In yet another aspect, the present invention is directed to a method for blocking phishing, the method comprising the steps of: at a point in a path of an email message from a sender thereof to a recipient thereof: replacing an original URL reference of a hyperlink within the email message with a URL reference of a phishing inspection utility, and setting the original URL reference as a parameter of the URL reference of the phishing inspection utility; upon activating the hyperlink from an email client: sending the original URL reference of the hyperlink to the phishing inspection utility; testing the original URL reference by the phishing inspection utility as being a phishing URL; if the original URL is not found as phishing URL, directing a browser of the user to the original URL. According to one embodiment of the invention, the testing is carried out by searching the original URL reference within a black list of known phishing URL references. Preferably, the phishing inspection utility is located remotely to the email client.

In a further aspect, the present invention is directed to a system for blocking phishing of an email message to be displayed by an email client, comprising: a phishing inspection utility; a utility for sending a URL reference of an activated hyperlink of an email message to the phishing inspection utility instead of directing a browser to the URL; a utility for activating a browser to access the URL if the testing indicates that the URL is not a phishing URL. According to one embodiment of the invention the utility for testing a URL as being a phishing URL determines the URL as phishing URL if the URL exists within a black list of phishing URL references. The system may further comprise a center for updating the black list of phishing URL references.

### Brief Description of the Drawings

The present invention may be better understood in conjunction with the following figures:

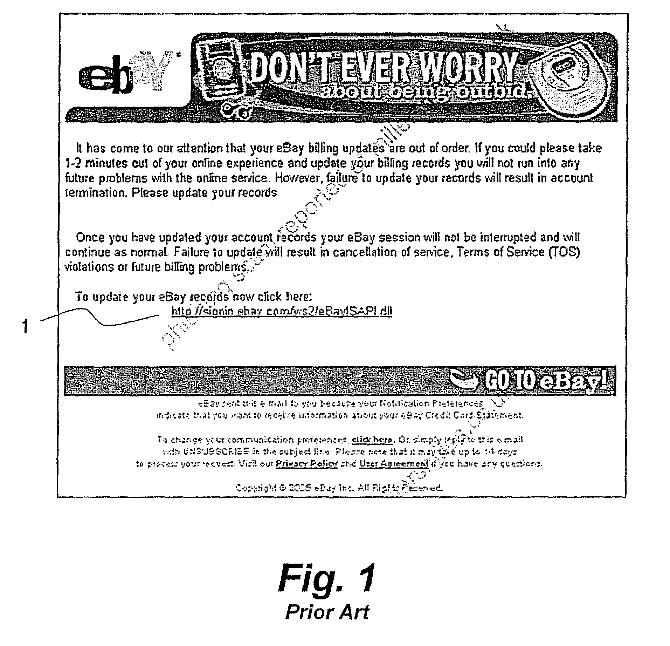

Fig. 1 is a phishing email message that was reported to millersmile.co.uk, according to the prior art.

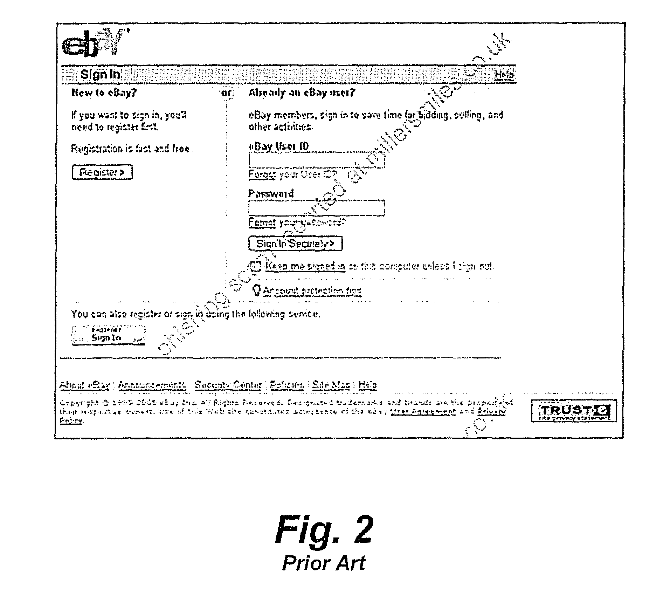

Fig. 2 is a web page to which a user that has clicked the hyperlink of Fig. 1 is directed, according to the prior art.
Figs. 3 and 4 schematically illustrate operation and infrastructure of email delivering and blocking, according to the prior art.

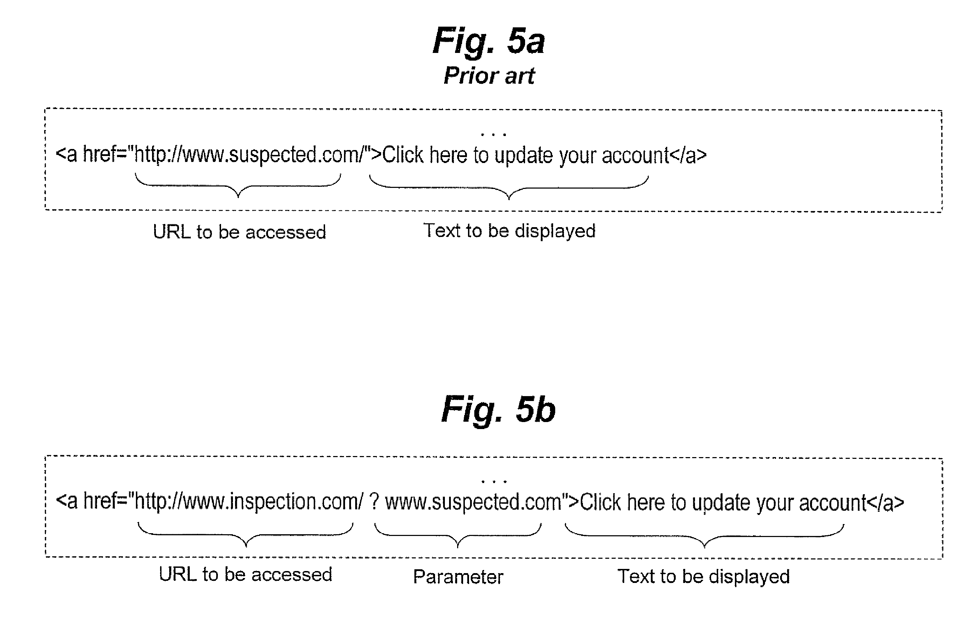

Fig. 5a illustrates an anchor within an email message, according to the prior art. Fig. 5b illustrates the anchor of Fig. 5a as amended according to a preferred embodiment of the invention.

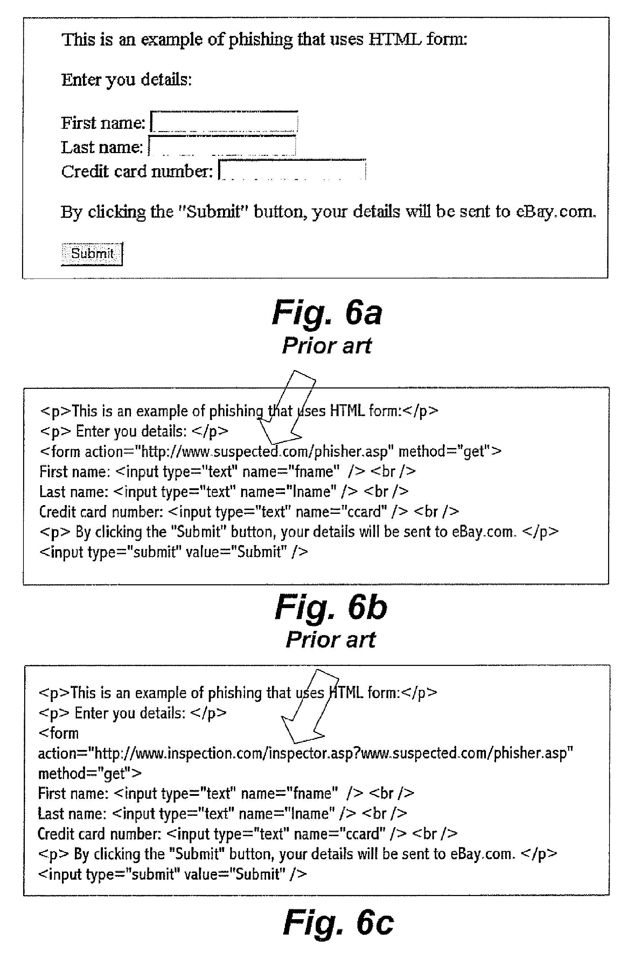

Fig. 6a illustrates a part of an email message that comprises a form, according to the prior art. Fig. 6b is the corresponding HTML of Fig. 6a. Fig. 6c illustrates the amendment to the HTML part of Fig. 6b, according to a preferred embodiment of the invention.

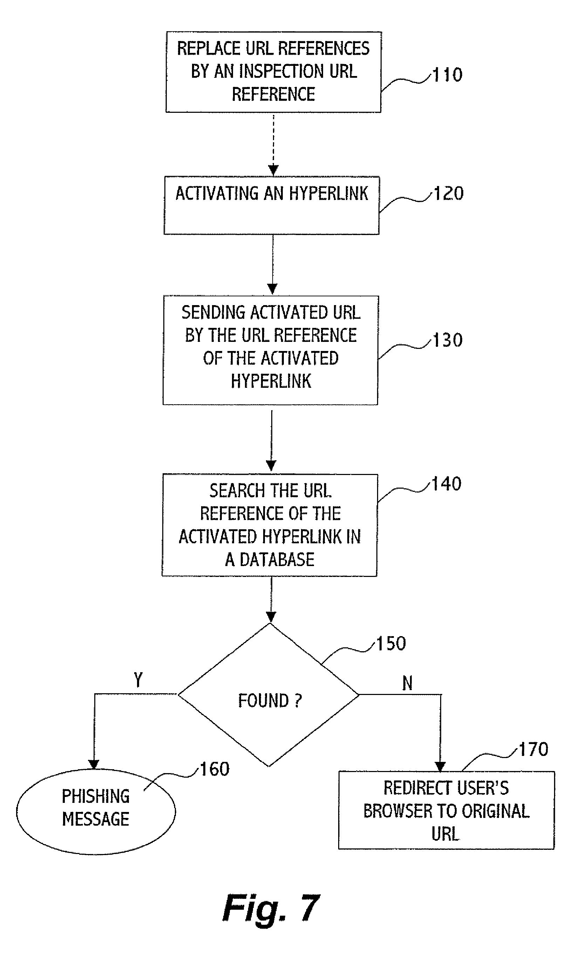

Fig. 7 is a flowchart of a method for blocking phishing scams, according to a preferred embodiment of the invention.

### Detailed Description of Preferred Embodiments

Hyperlinks cannot be added to plain-text email messages. Hyperlinks can be added to email messages that employ markup notation, such as HTML, XML, Rich text (RTF), and so forth. The Outlook email client, for example, supports plain text, HTML and Rich text, which is also a markup notation.

The Anchor Tag and the HREF attribute of HTML (Hypertext Markup Language) uses the <*a*> (anchor) tag to create a link to another document. An anchor can point to any resource on the Web: an HTML page, an image, a sound file, a movie, etc. The syntax of an anchor in HTML is:
*<a href="url-reference">Text to be displayed<*/*a>*

The *<a>* tag is used to create an anchor to link from, the HREF attribute is used to address the document to link to, and the words between the open (*"<a* --->") and close (*"*/*a>"*) of the anchor tag are displayed as a hyperlink. The *"url-reference"* is the hyperlink reference".

The following anchor defines a link to eBay.com:
*<a href="http:*//*www.weBay.com*/*">Visit eBay!<*/*a>* and will look in a browser as "Visit eBay!".

Fig. 5a illustrates an anchor within an email message, according to the prior art. The message is in HTML. The text to be displayed within the email message is "Click here to update your account". By clicking this text the user's browser is directed to *http:*//*www.suspected.com*/*,* i.e. the phishing URL.

According to a preferred embodiment of the invention, anchors within an email message are amended such that the pointed URL is replaced to point at an inspection URL, and the original URL is provided to the inspection URL as parameter.

Fig. 5b illustrates the anchor of Fig. 5a as amended according to a preferred embodiment of the invention. The text to be displayed within the email message is "Click here to update your account", as in Fig. 5a, however by clicking the text the user's browser is directed to *www.inspection.com,* in contrast to the example of Fig. 5a where the browser is directed to *http:llwww.suspected.com*/*.* Nevertheless, the identity of the URL that the original message points at, i.e. *www.suspected.com,* is provided to the web server that corresponds to *www.inspection.com* as parameter. Thus, after the amendment, when a user clicks on the phishing hyperlink, the web server at *www.inspection.com* receives the suspected URL information and scans the phishing black list in order to find the suspected URL in this list. If the searched URL is present in the black list then the user's browser is directed to a URL that displays a warning, etc. Otherwise, the user's browser is directed to the original URL, i.e. *www.suspected.com.*

Fig. 6a illustrates a part of an email message that comprises a form, according to the prior art. The user is asked to type his name and credit card number, and then click the "Submit" button in order to submit these details will be sent to eBay.com. However, as can be seen from Fig. 6b, which is the corresponding HTML of Fig. 6a, the details typed by the user will be sent to *www.suspected.com*/*phisher.asp.*

Fig. 6c illustrates the amendment to the HTML part of Fig. 6b, as amended according to a preferred embodiment of the invention. The text *www.suspected.com*/*phisher.asp* of the original message has been replaced by the text *www.inspection.com*/*inspector.asp?www.suspected.com*/*phisher.asp,* which means that the text "www.suspected.com/phisher.asp" will be sent to *www.inspection.com* along with the details entered by the user. In case the URL *www.suspected.com*/*phisher.asp* is found by the phishing inspection utility as legitimate, the information will be forwarded to this URL, i.e. to *www.suspected.com*/*phisher.asp.*

According to a further embodiment of the invention, instead of replacing the original URL string with the URL that performs the phishing inspection, as in the examples of Figs. 5 and 6, an execution code is added to the email (e.g. in script language such as VBScript, JavaScript, etc.) for interacting with the phishing server, and replacing or adding to the corresponding places in the original email message a call to this function.

Amending the URL reference of a hyperlink within an anchor, a form and execution code of an email message in order to issue a request for testing a suspected URL reference to a server are merely examples. Those skilled in the art will appreciate that other elements of a markup language may be amended in order to issue a request for inspecting a suspected URL reference of a hyperlink.

Fig. 7 is a flowchart of a method for blocking phishing scams, according to a preferred embodiment of the invention.

At block 110, which takes place when an email message reaches an email server, a gateway server to a LAN, etc., or even to a user's computer, the URL references within the email message are replaced by a reference to a URL in which a phishing inspection utility operates. The original URL reference is placed as a parameter of the URL reference of the inspection utility.

At block 120, which takes place after the user opens the email message, the user clicks the hyperlink.

At block 130, the suspected URL reference is sent to the inspection utility.

At block 140, the suspected URL reference is searched within a database of known phishing URL references.

From block 150, if the tested URL reference is found in the database, the reference URL is of a phishing web site, and therefore the user's browser is redirected to a URL which displays a warning, etc. Otherwise, on block 170 the user's browser is redirected to the original URL.

By using the present invention the load on a phishing blocking utility might be decreased since instead of performing a search in the database for all the hyperlinks in an email message, according to a preferred embodiment of the invention only the hyperlinks that were activated by a user are checked. Thus, the load on the phishing loading facility thereof is decreased tremendously. Furthermore, the suspected URL is searched in the phishing database only when the user activates the URL, in contrast to the prior art, where the database was searched once an email message reaches to the phishing blocking utility thereof.

Those skilled in the art will appreciate that the invention can be embodied in other forms and ways, without losing the scope of the invention. The embodiments described herein should be considered as illustrative and not restrictive. Especially those skilled in the art will appreciate that additional forms of sending information about the suspected URL to a phishing inspection utility can be used. The examples presented herein are directed to explain the invention.

## Claims

1. A method for blocking phishing, the method comprising the steps of:
- upon activating a hyperlink of an email message at a user's email client, testing the URL reference of said hyperlink for being a phishing URL; and
- if said URL is not indicated as a phishing URL, directing a browser of said user to said URL.

2. A method according to claim 1, wherein said testing the URL reference of a hyperlink for being a phishing URL is carried out by searching said URL reference in a black list of phishing URL references.

3. A method according to claim 2, wherein said black list is updated by a phishing center over a network.

4. A method for blocking phishing, wherein said sending includes the steps of:
upon activating a hyperlink within an email message by a user's email client:
- sending an original URL reference of said hyperlink to a phishing inspection utility;
- testing said original URL reference by said phishing inspection utility for being a phishing URL;
- if said original URL is not found as phishing URL, directing a browser of said user to said original URL.

5. A method according to claim 4, wherein said sending includes the steps of:
- replacing the original URL reference of said hyperlink with a URL reference of said phishing inspection utility; and
- setting said original URL reference as a parameter to said URL reference of said phishing inspection utility, thereby on activating said hyperlink providing to said inspection utility the URL reference to be tested.

6. A method according to claim 4, wherein said testing is carried out by searching said original URL reference within a black list of known phishing URL references.

7. A method according to claim 4, wherein said phishing inspection utility is located remotely to said email client.

8. A method for blocking phishing, the method comprising the steps of:
at a point in a path of an email message from a sender thereof to a recipient thereof:
- replacing an original URL reference of a hyperlink within said email message with a URL reference of a phishing inspection utility, and setting said original URL reference as a parameter of said URL reference of said phishing inspection utility;
upon activating said hyperlink from an email client:
- sending the original URL reference of said hyperlink to said phishing inspection utility;
- testing said original URL reference by said phishing inspection utility as being a phishing URL;
- if said original URL is not found as phishing URL, directing a browser of said user to said original URL.

9. A method according to claim 8, wherein said testing is carried out by searching said original URL reference within a black list of known phishing URL references.

10. A method according to claim 8, wherein said phishing inspection utility is located remotely to said email client.

11. A system for blocking phishing of an email message to be displayed by an email client, comprising:
- a phishing inspection utility;
- a utility for sending a URL reference of an activated hyperlink of an email message to said phishing inspection utility instead of directing a browser to said URL;
- a utility for activating a browser to access said URL if said testing indicates that said URL is not a phishing URL.

12. A system according to claim 11, wherein said utility for testing a URL as being a phishing URL determines said URL as phishing URL if said URL exists within a black list of phishing URL references.

13. A system according to claim 11, further comprising a center for updating said black list of phishing URL references.

## Amended claims

### Amended claims in accordance with Rule 86(2) EPC.

**1.** A method for blocking phishing, the method comprising the steps of: upon activating a hyperlink within an email message by a user's email client:
- sending an original URL reference of said hyperlink to a phishing inspection utility;
- testing said original URL reference by said phishing inspection utility for being a phishing URL;
- if said original URL is not found as phishing URL, directing a browser of said user to said original URL.
and **characterized in that** the method further comprises the step of, at a point in a path of the email message from a sender thereof to a recipient thereof:
- replacing said original URL reference within said email message with a URL reference of said phishing inspection utility and setting said original URL reference as a parameter of said URL reference of said phishing inspection utility, so that said original URL reference is sent to said phishing inspection utility as said parameter of said URL reference of said phishing inspection utility.

**2.** A method according to claim 1, wherein said testing is carried out by searching said original URL reference within a black list of known phishing URL references.

**3.** A method according to claim 2, wherein said black list is updated by a phishing center over a network.

**4.** A method according to claim 1, wherein said phishing inspection utility is located remotely to said email client.

**5.** A system for blocking phishing of an email message to be displayed by an email client, comprising:
- a phishing inspection utility;
- a utility for sending an original URL reference of a hyperlink within the email message to said phishing inspection utility for testing instead of directing a browser to said URL;
- a utility for activating said browser to access said original URL if said testing indicates that said original URL is not a phishing URL;
and **characterized in that** the system further comprises:
- a utility, at a point in a path of the email message from a sender thereof to a recipient thereof, for replacing said original URL reference with a URL reference of said phishing inspection utility and setting said original URL reference as a parameter of said URL reference of said phishing utility, so that said utility for sending said original URL reference to said phishing inspection utility for testing sends said original URL reference to said phishing inspection utility as said parameter of said URL reference of said phishing utility.

**6.** A system according to claim 5, wherein said utility for testing a URL as being a phishing URL determines said URL as phishing URL if said URL exists within a black list of phishing URL references.

**7.** A system according to claim 5, further comprising a center for updating said black list of phishing URL references.
